# FASCICULE DE BREVET EUROPEEN

(11) **EP 4 419 855 B1**
(45) Date de publication et mention de la délivrance du brevet: **03.09.2025**
(21) Numéro de dépôt: 22801139.1
(22) Date de dépôt: 12.10.2022
(51) Int. Cl.: F28D 15/04, B64G 1/50

(54) **CALODUC DE TYPE A POMPAGE CAPILLAIRE AVEC RAINURES REENTRANTES A GESTION DE LIQUIDE AMELIOREE**
KAPILLARGEPUMPTES WÄRMEROHR MIT WIEDEREINTRITTSRILLEN MIT VERBESSERTER FLÜSSIGKEITSVERWALTUNG
CAPILLARY-PUMPED-TYPE HEAT PIPE WITH REENTRANT GROOVES, HAVING IMPROVED LIQUID MANAGEMENT

(30) Priorité: 18.10.2021 FR 2111012
(43) Date de publication de la demande: 28.08.2024
(73) Titulaire: Commissariat à l'Energie Atomique et aux Energies Alternatives, 75015 Paris (FR); Airbus Defence and Space SAS, 31402 Toulouse (FR)
(72) Inventeur: MARIOTTO, Mathieu, 38054 GRENOBLE (FR); CHAMPEL, Bénédicte, 38054 GRENOBLE (FR); GRUSS, Jean-Antoine, 38170 SEYSSINET (FR); CLAUDET, Vincent, 31402 TOULOUSE (FR); LIOGER-ARAGO, Robin, 38054 GRENOBLE (FR)
(74) Mandataire: Ipsilon
(86) Numéro de dépôt international: PCT/EP2022/078384
(87) Numéro de publication internationale: WO 2023/066753

(56) Documents cités:
- EP-A1- 3 553 445
- US-A- 4 602 679
- US-A1- 2005 022 978
- US-A1- 2019 293 362

## Description

### Domaine technique

La présente invention concerne un caloduc à pompage capillaire à rainures réentrantes.

La présente invention vise principalement à améliorer la gestion du liquide à l'intérieur d'un tel caloduc.

### Technique antérieure

Un caloduc comporte une enceinte hermétiquement close, un fluide de travail et un réseau capillaire. Lors de la fabrication, tout l'air présent dans le tube caloduc est évacué et on introduit une quantité de liquide pur permettant de saturer le réseau capillaire. Il y a alors établissement d'un équilibre entre la phase liquide et la phase vapeur.

Sous l'effet d'une source chaude appliquée dans une zone à l'une des extrémités longitudinales, désignée évaporateur, le liquide se vaporise en induisant une légère surpression qui provoque le mouvement de la vapeur vers une zone à l'autre extrémité longitudinale, désignée condenseur. Au condenseur, la vapeur se condense et repasse en phase liquide. Le fluide condensé circule dans le réseau capillaire et revient vers l'évaporateur sous l'effet de forces capillaires, lorsque le caloduc n'est pas soumis à la gravité. Le retour du fluide liquide du condenseur à l'évaporateur est obtenu par pompage capillaire.

Les caloducs à rainures fonctionnent sur le principe du pompage capillaire. Ils comportent un tube, dans lequel la surface intérieure comporte des rainures axiales/longitudinales [1] ou légèrement en forme de spirale. Les caloducs à rainures comportent un cœur vapeur et un réseau capillaire dans lequel circule le liquide. Du fait d'une variation de courbure de l'interface liquide-vapeur entre la zone condenseur et la zone évaporateur, un gradient de pression apparaît dans le liquide, qui mène à une variation de pression capillaire. Plus la largeur des rainures est petite, plus l'effet de pompage capillaire est important.

Par ailleurs, des rainures profondes permettent d'obtenir une section de passage pour le retour liquide grande, et donc de minimiser la perte de pression.

La puissance maximale que peuvent transporter des caloducs à rainures est généralement fixée par la limite capillaire dont le terme moteur est la pression capillaire, et le terme limitant essentiellement la perte de pression liquide dans les rainures et, dans une moindre mesure les pertes de charge de l'écoulement vapeur..

Les caloducs à rainures réentrantes sont des exemples particuliers de caloducs à rainures, dans lesquelles les rainures présentent un canal de liaison étroit par rapport au reste de la rainure, ce qui permet d'augmenter l'effet de pompage capillaire tout en limitant les pertes de charge. Ces caloducs sont utilisés principalement dans le domaine spatial, par exemple pour la régulation thermique dans les satellites et/ou les engins spatiaux.

Les techniques de réalisation connues des caloducs à rainures, et notamment des caloducs à rainures réentrantes, ne permettent pas d'obtenir des rainures ayant une profondeur sensiblement plus grande que leur largeur.

Ces caloducs sont réalisés essentiellement par extrusion. Avec une telle technique, le rapport profondeur sur largeur de rainures rectangulaires est de l'ordre de 1.

Dans le cas des rainures réentrantes, les contraintes de fabrication sont encore plus draconiennes, limitant la largeur, la longueur du rétrécissement et la section de la partie réentrante.

Une autre technique utilise l'usinage mécanique, avec cette technique également le rapport profondeur sur largeur n'est pas sensiblement supérieur à 1. En outre, cette technique a un prix de revient relativement élevé et n'est pas adaptée à la fabrication en moyenne et grande série.

Une autre technique utilise la gravure chimique. Mais elle ne permet pas non plus d'avoir un rapport profondeur sur largeur important.

Pour pallier ces inconvénients, la demanderesse a proposé dans la demande de brevet EP3553445A1 un caloduc réalisé par empilement de plaques solidarisées entre elles avec étanchéité, dont les plaques d'extrémité formant des plaques de fermeture et les plaques intercalaires sont structurées, de sorte que leur empilement délimite des rainures réentrantes s'étendant sur toute la longueur du caloduc. Les plaques peuvent être assemblées par différentes techniques de soudure, brasure ou collage.

Dans le cas de caloducs rainurés, les inventeurs n'ont pas identifié de véritable axe de recherche pour améliorer la gestion du liquide de travail à l'intérieur d'un caloduc.

Le brevet EP3207324B1 concerne un caloduc plat dans lequel l'excédent de liquide est géré par un réservoir dédié, plutôt appliqué à des chambres vapeur.

Par conséquent, il existe un besoin pour améliorer encore les caloducs à rainures, plus particulièrement les caloducs à rainures réentrantes, et ce afin d'en optimiser le fonctionnement, d'améliorer leurs performances et d'étendre leurs domaines de fonctionnement, plus particulièrement d'améliorer la gestion du liquide.

Le but général de l'invention est alors de répondre au moins en partie à ce besoin.

### Exposé de l'invention

Pour ce faire, l'invention a tout d'abord pour objet un caloduc à rainures réentrantes, s'étendant le long d'une première direction longitudinale (X), comprenant une enceinte étanche s'étendant entre une première extrémité longitudinale, destinée à être échauffée par une source chaude pour former, au sein de l'enceinte, un évaporateur et une deuxième extrémité longitudinale destinée à être refroidie par une source froide pour former, au sein de l'enceinte, un condenseur, l'enceinte étanche délimitant une zone adiabatique entre l'évaporateur et le condenseur, l'enceinte comprenant un empilement de plaques selon une deuxième direction (Z) orthogonale à la première direction (X), l'empilement comprenant deux plaques de fermeture, au moins un nombre de n modules les uns sur les autres avec n étant un entier >1, chaque module comprenant au moins une plaque intercalaire entre les plaques de fermeture, la ou les plaques intercalaires comprenant au moins une première plaque intercalaire comportant au moins une fenêtre dont les bords délimitent en partie un canal vapeur s'étendant le long de la première direction (X) entre l'évaporateur et le condenseur, dans lequel la vapeur est destinée à circuler, et sur au moins un côté latéral de la fenêtre selon une troisième direction (Y) orthogonale aux première (X) et deuxième (Z) directions, au moins une structuration dont les bords délimitent en partie un canal liquide dans l'évaporateur et le condenseur, au moins la première plaque intercalaire et délimitant un canal de liaison reliant le canal vapeur et le canal liquide au moins dans l'évaporateur et le condenseur.

Selon l'invention, les structurations et plaques intercalaires des n modules définissent un canal vapeur unique et sur au moins un côté latéral du canal vapeur, n canaux liquides dans l'évaporateur et le condenseur, la largeur des n canaux de liaison selon la deuxième direction (Z) étant augmentée dans le condenseur par rapport à celle dans la zone adiabatique et l'évaporateur.

Avantageusement, la largeur des n canaux de liaison étant identique sur toute la longueur selon la première direction (Z) dans le condenseur ou d'augmentation progressive depuis la zone adiabatique (Z_{A}).

Selon un mode de réalisation avantageux, le caloduc comprend un nombre de canal(ux) liquide(s) inférieur à n dans la zone adiabatique (Z_{A}).

De préférence, un unique canal liquide est défini dans la zone adiabatique.

Selon un mode de réalisation avantageux, le caloduc comprend des montants qui s'étendent dans la deuxième direction (Y) sur toute la hauteur du ou des canaux liquides dans la zone adiabatique (A), de sorte à constituer des piliers raidisseurs.

Selon un autre mode de réalisation avantageux, le caloduc comprend un nombre de canal(ux) de liaison inférieur à n dans la zone adiabatique (Z_{A}). De préférence, aucun canal de liaison n'étant délimité dans la zone adiabatique. Autrement dit, il n'y a aucune zone d'échange entre le canal vapeur et le(s) canal(ux) liquide(s) dans la zone adiabatique.

Selon une variante avantageuse, les structurations sont seulement d'un côté latéral de la fenêtre délimitant le canal vapeur.

De manière alternative, les structurations peuvent être sur chacun de deux côtés latéraux de la fenêtre, en regard l'un de l'autre.

Selon une autre variante de réalisation avantageuse, les parois entre canaux liquides étant d'épaisseur progressivement augmentée dans le condenseur, depuis la zone adiabatique. Selon un autre mode de réalisation avantageux, le caloduc comprend des ouvertures débouchantes, réalisées dans les plaques, afin de créer des interconnexions fluidiques entre les canaux liquides dans le condenseur et/ou dans la zone adiabatique et/ou dans l'évaporateur.

Selon un autre mode de réalisation avantageux, le caloduc comprend des rainures circonférentielles formant des canaux de drainage réalisés, de préférence par usinage, sur les bords intérieurs longitudinaux des plaques délimitant le canal vapeur et les canaux de liaison, au moins dans le condenseur.

L'invention a également pour objet un système comprenant :
- une source froide (SF) ;
- une source chaude (SC) et
- au moins un caloduc à rainures réentrantes tel que décrit précédemment, le caloduc étant agencé de sorte que le flux de chaleur de la source chaude (SC) sur l'évaporateur, et l'extraction de chaleur au condenseur vers la source froide (SF) étant sur au moins une face latérale de l'enceinte en regard des canaux liquides, ou sur une face latérale perpendiculaire à ceux-ci.

Ainsi, l'invention consiste essentiellement à proposer un caloduc à rainures réentrantes, qui contrairement aux caloducs selon l'état de l'art à section transversale interne identique sur toute la longueur du caloduc, présente au niveau du condenseur des canaux de liaison entre canaux liquides et canal vapeur qui sont plus largement ouverts comparativement aux autres zones du caloduc (évaporateur, zone adiabatique).

Pour améliorer la gestion de liquide d'un caloduc, les inventeurs de la présente invention sont repartis de la compréhension des variations de volume liquide.

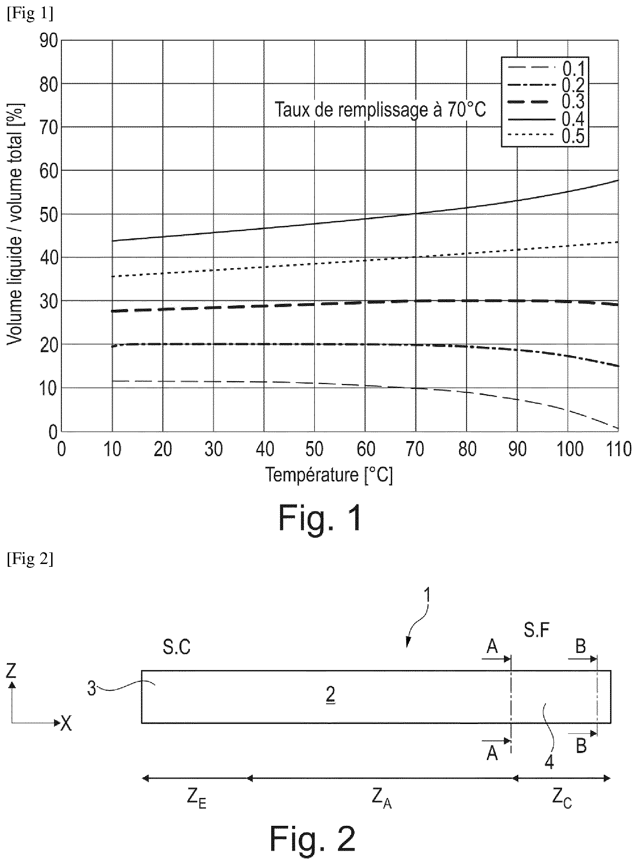

Un caloduc étant une enceinte close, la quantité de fluide qu'il contient est fixée au moment du remplissage et ne varie pas pendant la durée de vie du caloduc. En revanche, la répartition liquide/vapeur évolue en fonction de la température de fonctionnement du caloduc : en fonction du taux de remplissage, le volume liquide peut augmenter ou diminuer lorsque la température augmente, comme cela est illustré en figure 1.

Pour un taux de remplissage donné, le volume de liquide varie donc en fonction de la température d'opération du caloduc, qui est fixée par les conditions aux limites de celui-ci:
- lorsque la quantité de liquide augmente trop (sur-remplissage), cela entraine une flaque liquide (« puddle » en anglais), généralement située au niveau du condenseur qui est la zone où la pression est minimale. Cette flaque liquide affecte les performances en condensation. L'impact du liquide en excès est différent en conditions de gravité et en conditions de microgravité, comme expliqué dans la publication [2];
- à l'inverse, une trop faible quantité de liquide (sous-remplissage) entraine une dégradation importante de la capacité de transport et peut conduire à un assèchement, ce qui est beaucoup plus critique.

Ainsi, en règle générale, les concepteurs de caloducs privilégient de sur-remplir le caloduc à hautes températures, afin de limiter un sous-remplissage trop important dans la plage inférieure des températures.

Dans un caloduc à rainures réentrantes, la zone permettant d'accommoder les variations de quantité de liquide est constituée par les canaux de liaison entre les canaux liquides et le canal vapeur.

Pour un canal de liaison donné, le volume de cette zone est égal au produit de la longueur axiale du caloduc par la largeur de l'ouverture du canal de liaison et la longueur du canal de liaison.

Les inventeurs sont alors parvenus à la conclusion qu'augmenter l'ouverture du canal de liaison permet d'augmenter le volume de cette zone d'accommodation des variations de quantité de liquide, et donc d'augmenter la plage de températures d'opération accessibles pour le caloduc.

Pour des raisons de pompage capillaire, il est toutefois très préjudiciable pour la capacité de transport du caloduc d'ouvrir ce canal de liaison à l'évaporateur. Il est toutefois possible d'augmenter cette ouverture au niveau du condenseur sans impact notable sur la limite capillaire.

Les inventeurs de la présente invention ont analysé qu'avec la réalisation des caloducs à rainures réentrantes selon la demande de brevet EP3553445, qui consiste à empiler puis assembler entre elles des plaques métalliques poinçonnées ou usinées pour définir les différents canaux de caloduc, ils pouvaient justement réaliser cette ouverture du canal de liaison entre un canal liquide et le canal vapeur, différemment selon les zones du caloduc (évaporateur, zone adiabatique, condenseur).

En complément, la suppression partielle ou totale des parois entre canaux liquides dans la zone adiabatique pour laisser un nombre de canaux liquides réduits, de préférence à un unique canal, par rapport aux canaux liquides de l'évaporateur et du condenseur permet d'augmenter significativement la limite capillaire du caloduc.

Le fait de disposer les canaux liquides sur un seul côté latéral du caloduc permet également d'obtenir un gain substantiel sur la limite capillaire. Cela permet également un gain de masse :, car le nombre de canaux de liaisons liquide-vapeur. Or la zone des canaux de liaison liquide-vapeur est relativement lourde puisqu'il y a le vide occupe un faible espace et tout le reste est du métal. Par conséquent, avoir deux fois moins de canaux de liaisons permet d'allèger le caloduc.

Par ailleurs, au cours du fonctionnement d'un caloduc, la vapeur formée au niveau de l'évaporateur s'écoule jusqu'au condenseur, où elle se condense de nouveau en libérant ainsi la chaleur latente de vaporisation. Cette condensation se produit au niveau du condenseur sur les parois internes du caloduc, ainsi qu'à l'interface liquide-vapeur.

En configuration de caloduc à rainures réentrantes, le retour des condensats liquides formés sur les parois du canal vapeur vers les canaux liquides n'est pas assuré.

Ainsi, des rainures circonférentielles formant des canaux de drainage réalisés, de préférence par usinage, sur les bords intérieurs longitudinaux délimitant le canal vapeur et les canaux de liaison, au niveau du condenseur permettent avantageusement d'assurer ce retour.

Enfin, dans une configuration de l'état de l'art, les canaux liquides sont indépendants les uns des autres, ce qui entraîne les conséquences néfastes suivantes :
- dans le cas où la source chaude n'est pas positionnée de façon similaire par rapport à tous les canaux liquides, certains d'entre eux vont être plus sollicités que les autres, ce qui implique dans ces canaux « sur-sollicités » d'une part des vitesses de liquide plus élevées et donc des pertes de charge plus élevées et d'autre part des risques d'assèchement, et donc une augmentation de la résistance thermique du caloduc
- dans le cas où la source froide n'est pas positionnée de façon similaire par rapport à tous les canaux liquides, certains d'entre eux vont être mieux réalimentés que d'autres, ce qui entraine des vitesses de liquide plus élevées et donc des pertes de charge plus élevées.

Afin de favoriser les échanges de liquide entre les différents canaux liquides, et donc d'homogénéiser la quantité de liquide entre eux, l'invention consiste également à créer des ouvertures débouchantes dans les plaques afin de créer des interconnexions fluidiques entre ces canaux. Ces interconnexions peuvent être créées dans la zone condenseur et/ou dans la zone adiabatique et/ou dans la zone évaporateur.

L'invention apporte de nombreux avantages parmi lesquels on peut citer ceux par rapport la demande de brevet EP3553445, comme suit:
- augmentation du volume permettant d'accommoder les variations du volume liquide, et donc la possibilité d'avoir une plage de températures de fonctionnement accessibles plus large, à remplissage fixé ;
- amélioration du drainage du liquide vers les canaux liquides ce qui permet de pouvoir positionner la source froide sur n'importe laquelle des faces du caloduc ;
- homogénéisation de l'écoulement liquide dans les différents canaux liquides et donc réduction des pertes de charge, ce qui permet d'augmenter la limite capillaire, et la limite d'ébullition
- amélioration de la résistance à la pression du caloduc du fait d'une zone d'assemblage au niveau des canaux de liaison dans la zone adiabatique. Ceci permet de diminuer les épaisseurs périphériques, et donc soit de gagner sur la masse et l'encombrement à performances identiques, soit d'améliorer les performances à masse et encombrement identique.

Etant donné que les trois zones d'un caloduc selon l'invention (évaporateur, zone adiabatique, condenseur) n'ont pas la même section transversale interne, des caloducs différents devront être réalisés pour deux applications dont les longueurs des trois zones diffèrent, ce qui n'est pas favorable d'un point de vue coût de réalisation. Mais, dans le cas de systèmes embarqués, plus particulièrement dans le domaine spatial, ce désavantage est compensé par de meilleures performances.

D'autres avantages et caractéristiques ressortiront mieux à la lecture de la description détaillée, faite à titre illustratif et non limitatif, en référence aux figures suivantes.

### Brève description des dessins

[Fig 1] la figure 1 illustre la courbe délimitant le domaine de fonctionnement pour un exemple de caloduc à pompage capillaire, pour différents taux de remplissage.
[Fig 2] la figure 2 est une vue schématique de côté d'un exemple de caloduc à rainures réentrantes selon l'invention.
[Fig 3] la figure 3 est une vue en perspective et en coupe longitudinale de la zone adiabatique et de l'évaporateur d'un caloduc selon l'invention à six canaux liquides dans les condenseur et évaporateur.
[Fig 4] la figure 4 est une vue en perspective et en coupe transversale de la zone adiabatique d'un caloduc selon l'invention à unique canal liquide dans la zone adiabatique, comportant des raidisseurs , e les canaux de liaison liquide vapeur étant supprimés dans la zone adiabatique.
[Fig 5A] et [Fig 5B] les figures 5A et 5B sont des vues en perspective et en coupe transversale respectivement selon A-A et B-B, du condenseur d'un caloduc à rainures réentrantes selon la figure 2, ces figures montrant à la fois l'augmentation de la largeur d'ouverture des canaux de liaison et de celle des parois séparant les canaux liquides depuis la zone adiabatique jusque vers l'extrémité du caloduc.
[Fig 6] la figure 6 est une vue en perspective et en coupe du condenseur d'un caloduc selon deux variantes de l'invention.
[Fig 7] la figure 7 illustre, en vue en perspective et en coupe longitudinale, un autre mode de réalisation de caloduc à rainures réentrantes selon l'invention dont chacun des deux côtés latéraux comprend six canaux liquides dans les condenseur et évaporateur.
[Fig 8] , [Fig 8A], [Fig 8B], [Fig 9], [Fig 9A], [Fig 9B], [Fig 10], [Fig 10A], [Fig 10B], [Fig 11], [Fig 11A], [Fig 11B], [Fig 12], [Fig 12A], [Fig 12B] , [Fig 13], [Fig 13A] [Fig 13B] les figures 8 à 13B illustrent différentes possibilités d'agencement des canaux liquides de l'évaporateur et du condenseur d'un caloduc selon l'invention, relativement aux sources chaude et froide.

### Description détaillée

La figure 1 a déjà été commentée en préambule. Elle ne sera donc pas détaillée ci-après.

Sur les figures 2 à 5B, on peut voir un exemple de caloduc 1 à pompage capillaire à rainures réentrantes selon l'invention.

Sur la figure 2, l'exemple de caloduc 1 à pompage capillaire s'étendant selon un axe longitudinal X est vu de l'extérieur.

Le caloduc 1 comporte une enceinte étanche2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur Z_{E}. La deuxième extrémité longitudinale 4 est destinée à être refroidie par une source froide SF pour former au sein de l'enceinte un condenseur Zc.

L'enceinte étanche 2 délimite intérieurement une zone adiabatique Z_{A} entre l'évaporateur et le condenseur.

La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...

L'enceinte étanche 2 est réalisée par empilement et assemblage de plaques d'extrémité et de modules de plaques intercalaires 10 agencés entre les plaques d'extrémité, selon un procédé décrit dans la demande de brevet EP3553445.

Un module comprend au moins deux plaques intercalaires, les plaques des différents modules de plaques intermédiaires 10 comprenant des fenêtres ou d'autres structurations, étant empilées de sorte à délimiter des canaux 20, 21, 22 comme détaillé par la suite. Un module peut aussi comprendre une unique plaque usinée sur ses deux faces principales.

La réalisation, l'empilement et l'assemblage des plaques n'est pas détaillé ici, on pourra se reporter à la demande précitée EP3553445. Néanmoins, les plaques 10 sont préférentiellement en alliage d'aluminium et assemblées par brasure sous vide.

Un mode de réalisation préférentiel consiste à usiner des plaques 10 claddées sur leurs deux faces principales, puis réaliser l'assemblage de ces tôles par brasure eutectique sous vide. A titre de variante, on peut réaliser un usinage sur une seule face principale des plaques claddées.

Pour l'assemblage, différents procédés sont envisageables : brasure au bain de sel, brasure sous gaz inerte, soudage par ultrasons, soudure par friction-malaxage (« Friction Stir Welding » en anglais), collage...

Les dimensions extérieures des caloducs sont comprises entre quelques centimètres et quelques mètres. La taille maximale des caloducs est en général limitée par l'outillage disponible. En effet, l'assemblage des tôles par brasure sous vide requiert des fours sous vide de grande taille, de quelques mètres de longueur.

Pour la découpe et l'usinage des tôles, des machines de grande taille sont également requises. En outre, la tenue mécanique de tôles avec des découpes de faible largeur et de grande longueur est à prendre en compte.

Par exemple, des fenêtres sont réalisées par poinçonnage, découpage, par exemple au laser ou au jet d'eau.

Dans l'exemple illustré, toutes les plaques 10 présentent les mêmes dimensions extérieures, l'empilement définissant l'enceinte étanche 2 est alors de forme parallélépipédique rectangle avec quatre faces longitudinales 11, 12, 13, 14, parallèles au plan XY ou au plan XZ, ayant chacune une grande surface favorisant les échanges de chaleur avec la source chaude SC et la source froide SF.

Selon l'invention, l'empilement de plaques 10 avec leurs fenêtres ou leurs structurations délimite intérieurement un canal dit canal vapeur 20, et comme détaillé par la suite un ou plusieurs canaux dit canaux liquides 21, 21.1 à 21.6 et le cas échéant, un ou des canaux de liaison 22, en fonction de la zone du caloduc.

Plus précisément, le canal vapeur 20 de section transversale rectangulaire constante s'étend le long de l'axe longitudinal X. Le canal vapeur 20 sert à la circulation de la phase vapeur de l'évaporateur Z_{E} au condenseur Zc en passant par la zone adiabatique Z_{A}.

Un canal liquide 21, 21.1 à 21.6 est relié ou non au canal vapeur 20 en fonction de la zone du caloduc. Lorsqu'il est relié au canal vapeur 20, un canal liquide l'est par un canal de liaison 22 de section dans le plan XZ plus faible que celle du canal liquide. Chaque canal liquide est destiné à la circulation du liquide du condenseur Zc à l'évaporateur Z_{E}.

Un canal de liaison 22 est donc une zone d'échange entre la vapeur et le liquide.

Plus précisément, selon l'invention, le(s) canal(ux) liquide(s) 21, 21.1 à 21.6 et avantageusement les canaux de liaison 22 présente(nt) des sections transversales internes différentiées selon les différentes zones du caloduc (évaporateur Z_{E}, zone adiabatique Z_{A}, condenseur Zc).

Ces modifications de design selon l'invention apportent différentes améliorations sur la gestion du liquide.

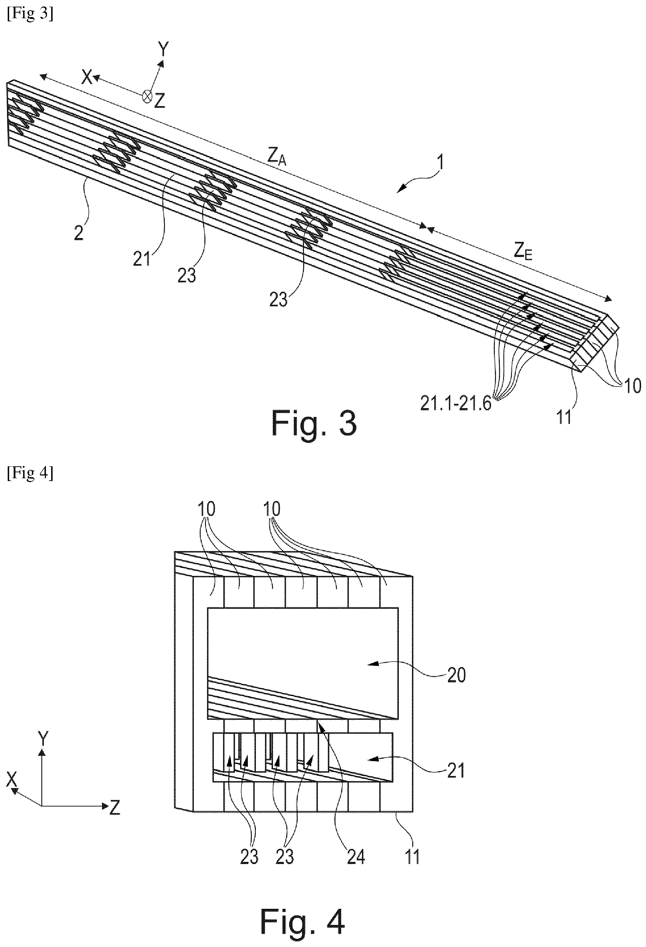

Les figures 3 et 4 montrent une première modification de design de caloduc : elle concerne la zone adiabatique Z_{A}.

Cette première modification consiste à supprimer partiellement totalement ou les parois entre canaux liquides 21.1 à 21.6 dans la zone adiabatique Z_{A} ou autrement dit à réduire le nombre de canaux liquides dans cette zone.

Dans l'exemple illustré, la zone adiabatique Z_{A} comprend un unique canal liquide 21 de section transversale identique sur toute sa longueur selon l'axe X, à ceci près que des piliers raidisseurs 23 qui s'étendent selon la direction Y, sont agencés à différents endroits. Ces raidisseurs 23 sont présents localement pour des raisons de mise en forme et de résistance mécanique de l'enceinte 2 au niveau de la zone adiabatique. Ces raidisseurs 23 peuvent induire des pertes de charge qui sont minimes.

Cette première modification permet d'interconnecter les différents canaux liquides et donc d'homogénéiser la circulation de liquide entre ceux-ci. Elle permet également de réduire les pertes de charge dans la zone adiabatique, qui est la partie du caloduc la plus longue, et donc la plus contributrice aux pertes de charge, et donc d'améliorer la limite capillaire.

Comme déjà indiqué, des raidisseurs 23 qui s'étendent sur la hauteur du canal liquide 21, c'est-à-dire selon l'axe Z peuvent être réalisés ponctuellement.

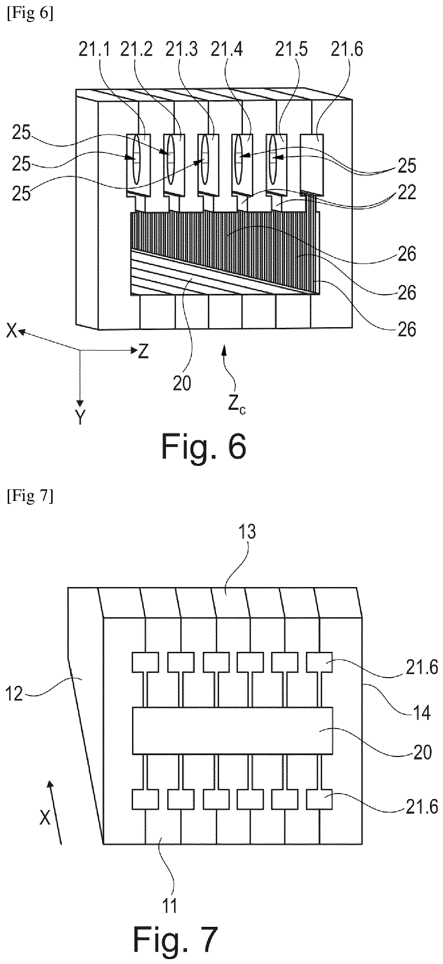

Également, il n'est pas nécessaire de maintenir le canal de liaison 22 entre liquide et vapeur dans la zone adiabatique. Il peut donc être supprimé dans cette zone, comme symbolisé par la zone de continuité de matière 24 en figure 6. Ainsi, toutes les plaques 10 de l'empilement peuvent être jointives dans la zone adiabatique Z_{A}, par exemple en étant brasées entre elles en délimitant une paroi étanche continue entre le canal vapeur 20 et le canal liquide 21. Cela a pour avantage de renforcer mécaniquement le caloduc dans la zone adiabatique Z_{A}.

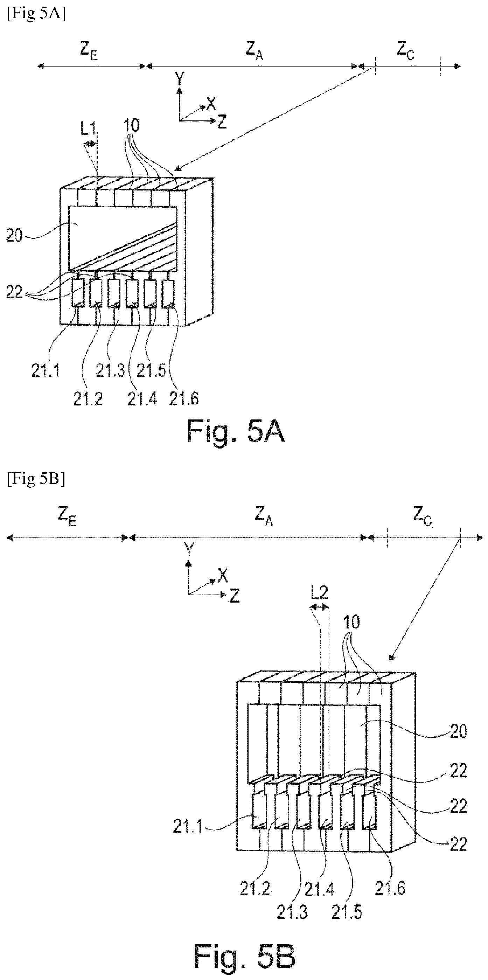

Les figures 5A et 5B montrent le condenseur du caloduc : il comprend un nombre de six canaux liquides 21.1, 21.2, 21.3, 21.4, 21.5 21.6 de section transversale identique entre eux à une cote donnée selon l'axe X, mais qui évolue progressivement depuis la zone adiabatique Z_{A} jusqu'à la deuxième extrémité longitudinale 4.

Plus précisément, chacun des six canaux liquides 21.1 à 21.6 présente une section transversale dans le plan YZ qui diminue depuis sa limite avec la zone adiabatique (figure 5A) jusqu'à la deuxième extrémité longitudinale 4 (figure 5B). Autrement dit, l'épaisseur des parois séparant les six canaux liquides 21.1 à 21.6 augmente depuis sa limite avec la zone adiabatique (figure 5A) jusqu'à la deuxième extrémité longitudinale 4 (figure 5B).

Une autre modification de design du condenseur consiste à augmenter la largeur des canaux de liaison 22 selon la direction Z par rapport à leur largeur dans l'évaporateur.

Comme montré en figures 5A et 5B, cette augmentation de la largeur L2-L1 des canaux de liaison 22 dans le condenseur peut être progressive depuis sa limite avec la zone adiabatique (figure 5A) jusqu'à la deuxième extrémité longitudinale 4 (figure 5B). Cet élargissement peut également être identique sur toute la longueur du condenseur.

Cette augmentation de la largeur L2-L1 permet d'augmenter le volume de la zone d'accommodation des variations de volume liquide dans le condenseur, et donc élargir, pour un taux de remplissage donné, la gamme de températures de fonctionnement du caloduc. Son impact sur la limite capillaire est négligeable.

Pour mettre en exergue l'augmentation de volume d'accommodation, les inventeurs ont fait plusieurs simulations numériques comparatives par rapport à un caloduc de référence, c'est-à-dire réalisé conformément à la demande de brevet EP3553445. On précise ici que les différents calculs numériques ont été réalisés avec un modèle analytique codé avec le progiciel commercialisé sous la dénomination « EES », ou « Engineering Equation Solver».

Les caractéristiques de ce caloduc de référence et d'un caloduc selon l'invention sont synthétisées dans le tableau 1 suivant.

### [Tableau 1]

**TABLEAU 1**

| **Caractéristiques** | | |
|---|---|---|
| | **Caloduc de référence** | **Invention** |
| Nombre de canaux liquides (sur une seule face longitudnale) | 6 | 6 |
| Longueur des canaux de liaison selon axe Y | 1mm | 1mm |
| Hauteur des canaux de liaison selon axe Z (évaporateur et zone adiabatique) | 0,2mm | 0,2mm |
| Hauteur des canaux de liaison selon axe Z (condenseur) | 0,2mm | 1mm |
| Longueur de l'évaporateur Z_{E} selon axe X | 20cm | 20cm |
| Longueur de la zone adiabatique Z_{A} selon axe X | 80cm | 80cm |
| Longueur du condenseur Zc selon axe X | 20cm | 20cm |
| Longpeur totale du caloduc selon axe X | 1,2m | 1,2m |
| Volume total de la zone d'accommodation | 1440mm³ | 2400mm³ |
| Volume de la zone d'accommodation au condenseur | 240mm³ | 1200mm³ |

De ce tableau 1, il ressort que le gain est de plus de 65% de volume pour accommoder les variations du volume de liquide dans le caloduc en élargissant la largeur des canaux de liaison 22.

Une autre modification consiste à créer des ouvertures débouchantes 25 dans les plaques 10, afin de créer des interconnexions fluidiques entre les canaux liquides 21.1 à 21.6 dans le condenseur et/ou dans la zone adiabatique et/ou dans l'évaporateur, comme illustré en figure 6.

Les interconnexions 25 ainsi créées permettent de favoriser les échanges de liquide entre les différents canaux liquides 21.1 à 21.6, ce qui d'une part assure des vitesses de liquide homogènes dans ceux-ci, et donc minimise le risque de pertes de charge supplémentaires dues à des vitesses locales de canal plus élevées, et d'autre part limite les risques d'assèchement des canaux.

Une dernière modification consiste à réaliser par usinage des rainures circonférentielles 26 sur les bords intérieurs longitudinaux des plaques délimitant le canal vapeur 20 et les canaux de liaison 22, comme illustré en figure 6.

Ces rainures circonférentielles 26 forment des canaux de drainage qui favorisent le retour des condensats liquides formés sur les parois du canal vapeur 20 vers les canaux liquides 21.1 à 21.6. Cela est particulièrement utile, notamment dans le cas où la source froide est (au moins en partie) localisée sur un plan différent de celui où se trouvent les canaux liquides. Mais du fait de la conduction thermique dans la plaque extérieure du caloduc, ces rainures de drainage 26 sont utiles même dans la configuration où la source froide se trouve au niveau des canaux liquides.

La figure 7 montre une variante d'exemple de caloduc selon l'invention, selon laquelle les canaux liquides 21.1, 21.2, 21.3, 21.4, 21.5 21.6 sont agencés sur deux faces longitudinales 11, 13 opposées du caloduc, c'est-à-dire en regard l'une de l'autre.

Différentes configurations de position des canaux liquides dans le caloduc et par rapport aux sources froides SF et chaudes SC peuvent être envisagées dans le cadre de l'invention :

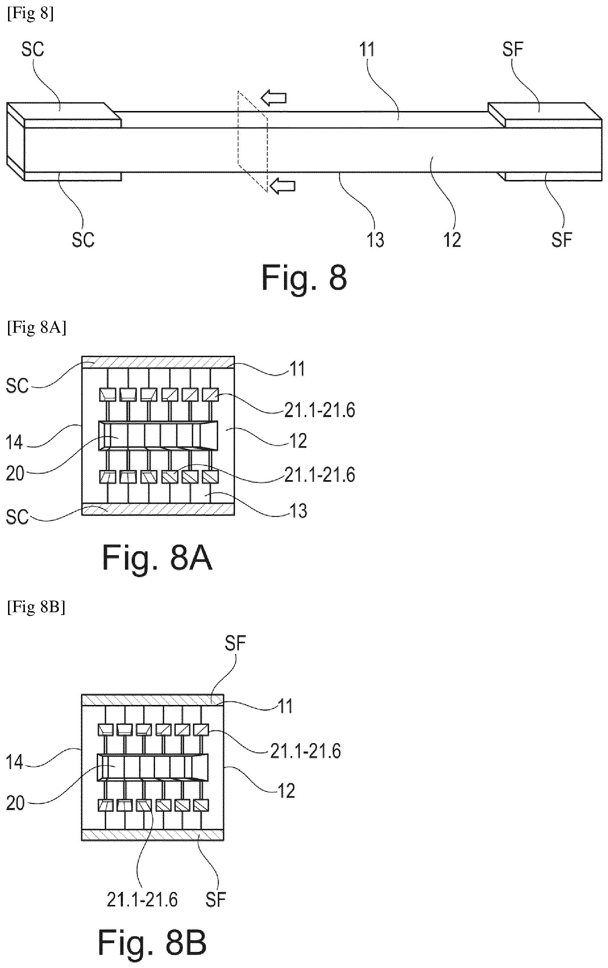

- les figures 8, 8A et 8B montrent un agencement de canaux liquides sur deux faces longitudinales opposées 11, 13 avec les flux de source de chaleur qui arrivent directement en contact avec celles-ci à l'évaporateur et l'extraction par la source froide également en contact avec celles-ci au condenseur;

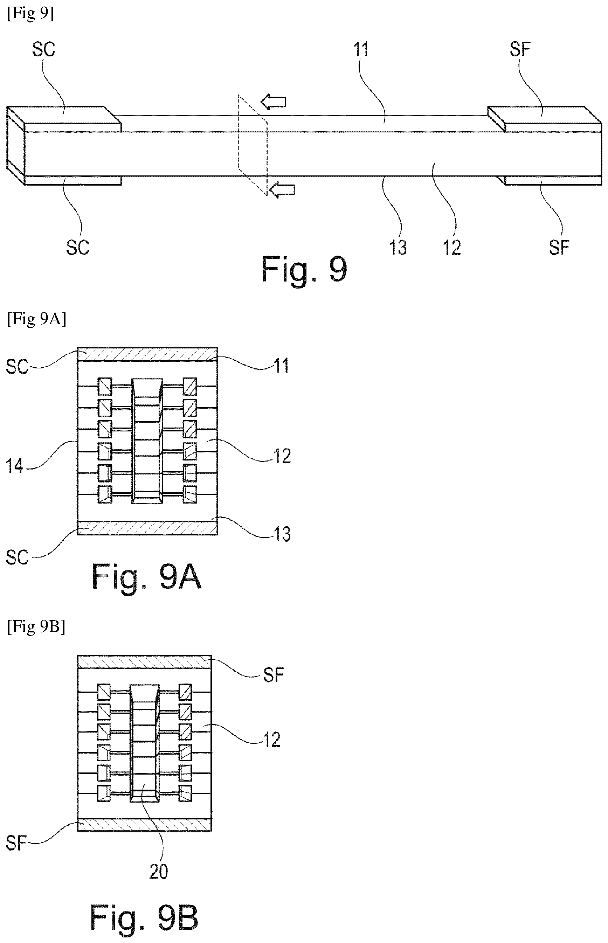

- les figures 9, 9A et 9B montrent un agencement de canaux liquides sur deux faces longitudinales opposées 12, 14 avec les flux de source de chaleur qui arrivent sur les faces 11, 13 orthogonales à celles-ci à l'évaporateur et l'extraction par la source froide également par les faces 11, 13 orthogonales à celles-ci au condenseur;

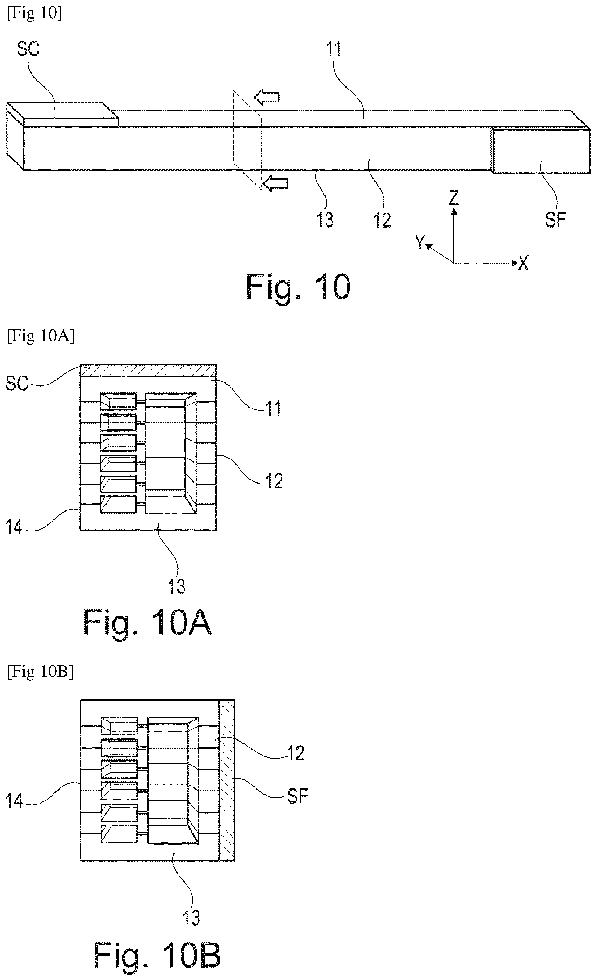

- les figures 10, 10A et 10B montrent un agencement de canaux liquides sur une seule face longitudinale 14 avec le flux de source de chaleur qui arrive sur une seule face 11 orthogonale à celles-ci à l'évaporateur et l'extraction par la source froide également par une seule face 12 en regard de celle-ci au condenseur;

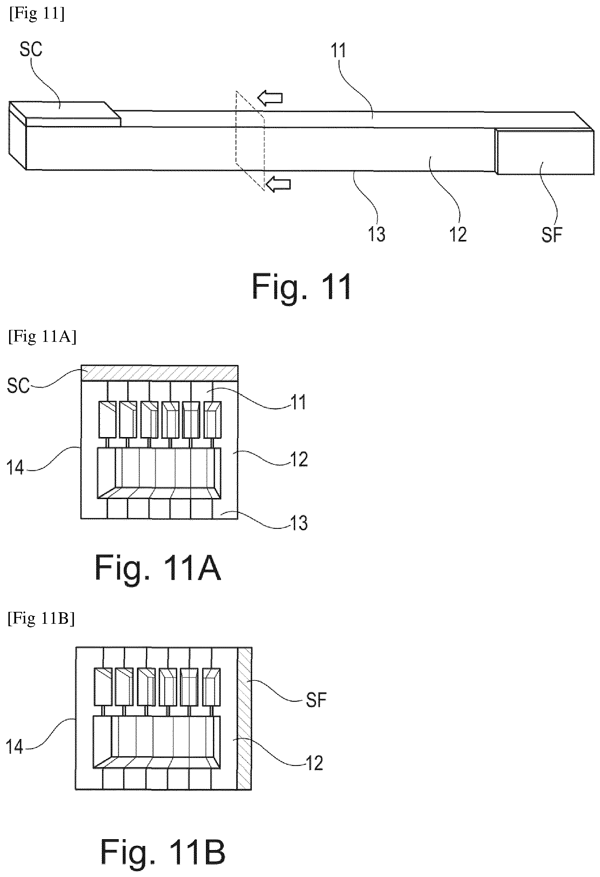

- les figures 11, 11A et 11B montrent un agencement de canaux liquides sur une seule face longitudinale 11 avec le flux de source de chaleur qui arrive directement sur cette face 11 à l'évaporateur et l'extraction par la source froide également par une seule face 12 orthogonale à celle-ci au condenseur;

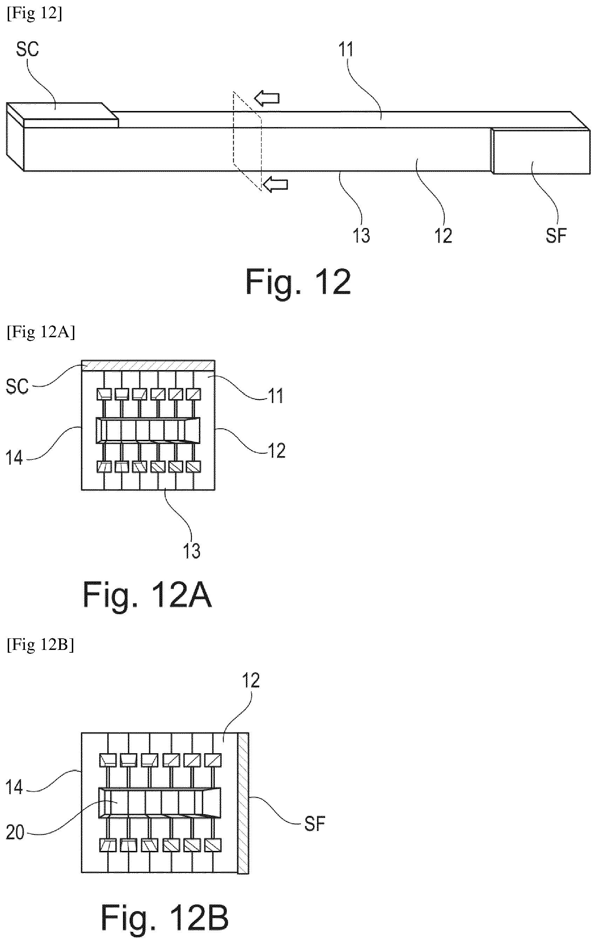

- les figures 12, 12A et 12B montrent un agencement de canaux liquides sur deux faces longitudinales opposées 11, 13 avec le flux de source de chaleur qui arrive directement en contact avec une seule de ces faces 11 à l'évaporateur et l'extraction par la source froide également par une seule face 12 orthogonale au condenseur;

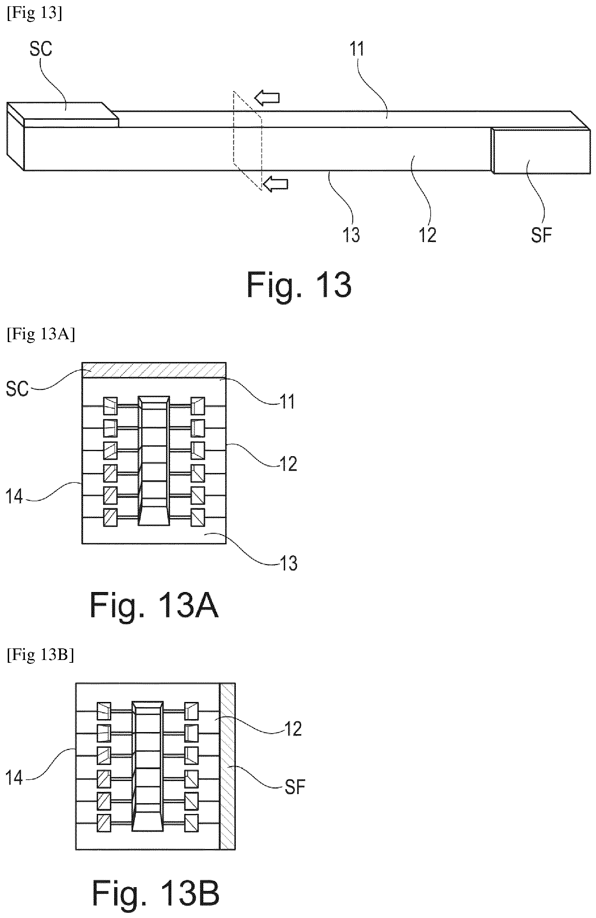

- les figures 13, 13A et 13B montrent un agencement de canaux liquides sur deux faces longitudinales opposées 12, 14 avec le flux de source de chaleur qui arrive sur une seule face 11 orthogonale à celles-ci à l'évaporateur et l'extraction par la source froide par une des deux faces 11, 13 orthogonales à celles-ci au condenseur.

D'autres avantages et améliorations pourront être apportées sans pour autant sortir du cadre de l'invention.

Par exemple, un caloduc selon l'invention peut comporter un nombre plus, ou moins important de canaux liquides que six par face longitudinale à l'évaporateur et au condenseur et un unique canal liquide dans la zone adiabatique.

L'invention n'est pas limitée aux exemples qui viennent d'être décrits; on peut notamment combiner entre elles des caractéristiques des exemples illustrés au sein de variantes non illustrées, a condition qu'ils soient dans la portée des revendications annexées.

Un caloduc est rempli d'un fluide diphasique, il peut s'agir d'un fluide bien connu de l'homme du métier. Celui-ci est choisi par exemple en fonction de la gamme de température de fonctionnement et de stockage du dispositif, en fonction des contraintes dues à la pression, l'inflammabilité, la toxicité du fluide et de la compatibilité chimique entre le fluide et le matériau formant le caloduc.

A titre d'exemple, pour un caloduc réalisé en alliage d'aluminium assemblé par brasure eutectique, on peut utiliser comme fluide l'ammoniac, l'acétone, le méthanol, le n-heptane, le R134a ou autres fluides frigorigènes fluorés.

### Liste des références citées

[1]: Christine Hoa :«Thermique des caloducs à rainures axiales : études et réalisations pour des applications spatiales». Université de Poitiers, 2004.
[2]: A.R. Anand, "Analytical and experimental investigations on heat transport capability of axially grooved aluminium-methane heat pipe", Int. J. Therm. Sciences 139 : 269-281 (2019).

## Revendications

1. Caloduc à rainures réentrantes (1), s'étendant le long d'une première direction longitudinale (X), comprenant une enceinte étanche (2) s'étendant entre une première extrémité longitudinale (3), destinée à être échauffée par une source chaude SC pour former, au sein de l'enceinte, un évaporateur et une deuxième extrémité longitudinale (4) destinée à être refroidie par une source froide SF pour former, au sein de l'enceinte, un condenseur, l'enceinte étanche délimitant une zone adiabatique entre l'évaporateur et le condenseur, l'enceinte comprenant un empilement de plaques (10) selon une deuxième direction (Z) orthogonale à la première direction (X), l'empilement comprenant deux plaques de fermeture, au moins un nombre de n modules les uns sur les autres avec n étant un entier >1, chaque module comprenant au moins une plaque intercalaire entre les plaques de fermeture, la ou les plaques intercalaires comprenant au moins une première plaque intercalaire comportant au moins une fenêtre dont les bords délimitent en partie un canal vapeur (20) s'étendant le long de la première direction (X) entre l'évaporateur et le condenseur, dans lequel la vapeur est destinée à circuler, et sur au moins un côté latéral de la fenêtre selon une troisième direction (Y) orthogonale aux première (X) et deuxième (Z) directions, au moins une structuration dont les bords délimitent en partie un canal liquide (21) dans l'évaporateur et le condenseur, au moins la première plaque intercalaire délimitant un canal de liaison (22) reliant le canal vapeur et le canal liquide au moins dans l'évaporateur et le condenseur, les structurations et plaques intercalaires des n modules définissant un canal vapeur unique et sur, le au moins un côté latéral du canal vapeur, n canaux liquides (21.1 à 21.6) dans l'évaporateur et le condenseur, **caractérise en ce que** la largeur des n canaux de liaison (22) selon la deuxième direction (Z) est augmentée dans le condenseur par rapport à la largeur dans la zone adiabatique et l'évaporateur.

2. Caloduc à rainures réentrantes selon la revendication 1, la largeur des n canaux de liaison étant identique sur toute la longueur selon la première direction (Z) dans le condenseur ou d'augmentation progressive depuis la zone adiabatique (Z_{A}).

3. Caloduc à rainures réentrantes selon la revendication 1 ou 2, comprenant un nombre de canal(ux) liquide(s) inférieur à n dans la zone adiabatique (Z_{A}).

4. Caloduc à rainures réentrantes selon la revendication 3, les structurations et plaques intercalaires des n modules définissant un unique canal liquide dans la zone adiabatique (Z_{A}).

5. Caloduc à rainures réentrantes selon la revendication 3 ou 4, comprenant des montants qui s'étendent dans la deuxième direction (Y) sur toute la hauteur du ou des canaux liquides dans la zone adiabatique (A), de sorte à constituer des piliers raidisseurs.

6. Caloduc à rainures réentrantes selon l'une des revendications 3 à 5, comprenant un nombre de canal(ux) de liaison inférieur à n dans la zone adiabatique (Z_{A}).

7. Caloduc à rainures réentrantes selon la revendication 6, aucun canal de liaison n'étant délimité dans la zone adiabatique.

8. Caloduc à rainures réentrantes selon l'une des revendications précédentes, les structurations étant seulement d'un côté latéral de la fenêtre délimitant le canal vapeur.

9. Caloduc à rainures réentrantes selon l'une des revendications 1 à 7, les structurations étant sur chacun de deux côtés latéraux de la fenêtre, en regard l'un de l'autre.

10. Caloduc à rainures réentrantes selon l'une des revendications précédentes, les parois entre canaux liquides étant d'épaisseur progressivement augmentée dans le condenseur, depuis la zone adiabatique.

11. Caloduc à rainures réentrantes selon l'une des revendications précédentes, comprenant des ouvertures débouchantes (25), réalisées dans les plaques, afin de créer des interconnexions fluidiques entre les canaux liquides (21.1 à 21.6) dans le condenseur et/ou dans la zone adiabatique et/ou dans l'évaporateur.

12. Caloduc à rainures réentrantes selon l'une des revendications précédentes, comprenant des rainures circonférentielles (26) formant des canaux de drainage réalisés, de préférence par usinage, sur les bords intérieurs longitudinaux des plaques délimitant le canal vapeur et les canaux de liaison, au moins dans le condenseur.

13. Système comprenant :
- une source froide (SF) ;
- une source chaude (SC) et
- au moins un caloduc à rainures réentrantes selon l'une des revendications précédentes, le caloduc étant agencé de sorte que le flux de chaleur de la source chaude (SC) sur l'évaporateur, et l'extraction de chaleur au condenseur vers la source froide (SF) étant sur au moins une face latérale de l'enceinte en regard des canaux liquides, ou sur une face latérale perpendiculaire à ceux-ci.

## Patentansprüche

1. Wärmerohr mit Wiedereintrittsrillen (1), das sich entlang einer ersten Längsrichtung (X) erstreckt, umfassend eine dichte Hülle (2), die sich zwischen einem ersten Längsende (3), das dazu bestimmt ist, von einer Wärmequelle SC erwärmt zu werden, um im Inneren der Hülle einen Verdampfer zu bilden, und einem zweiten Längsende (4), das dazu bestimmt ist, von einer Kältequelle SF gekühlt zu werden, um im Inneren der Hülle einen Kondensator zu bilden, erstreckt, wobei die dichte Hülle eine adiabate Zone zwischen dem Verdampfer und dem Kondensator begrenzt, wobei die Hülle einen Stapel von Platten (10) entlang einer zu der ersten Richtung (X) orthogonalen zweiten Richtung (Z) umfasst, wobei der Stapel zwei Abschlussplatten, mindestens eine Anzahl von n Modulen übereinander, wobei n eine ganze Zahl > 1 ist, umfasst, wobei jedes Modul mindestens eine Zwischenplatte zwischen den Abschlussplatten umfasst, wobei die Zwischenplatte oder -platten mindestens eine erste Zwischenplatte umfassen, die mindestens ein Fenster aufweist, dessen Ränder zum Teil einen Dampfkanal (20) begrenzen, der sich entlang der ersten Richtung (X) zwischen dem Verdampfer und dem Kondensator erstreckt und in dem der Dampf strömen soll, und auf mindestens einer lateralen Seite des Fensters entlang einer zu der ersten (X) und der zweiten (Z) Richtung orthogonalen dritten Richtung (Y) mindestens eine Strukturierung, deren Ränder zum Teil einen Flüssigkeitskanal (21) in dem Verdampfer und dem Kondensator begrenzen, wobei mindestens die erste Zwischenplatte einen Verbindungskanal (22) begrenzt, der den Dampfkanal und den Flüssigkeitskanal mindestens in dem Verdampfer und dem Kondensator verbindet, wobei die Strukturierungen und Zwischenplatten der n Module einen einzigen Dampfkanal und auf der mindestens einen lateralen Seite des Dampfkanals n Flüssigkeitskanäle (21.1 bis 21.6) in dem Verdampfer und dem Kondensator definieren, **dadurch gekennzeichnet, dass** die Breite der n Verbindungskanäle (22) entlang der zweiten Richtung (Z) im Verhältnis zu der Breite in der adiabaten Zone und dem Verdampfer in dem Kondensator erhöht ist.

2. Wärmerohr mit Wiedereintrittsrillen nach Anspruch 1, wobei die Breite der n Verbindungskanäle über die gesamte Länge entlang der ersten Richtung (Z) in dem Kondensator identisch oder von der adiabaten Zone (Z_{A}) aus progressiv zunehmend ist.

3. Wärmerohr mit Wiedereintrittsrillen nach Anspruch 1 oder 2, das eine Anzahl von einem oder mehreren Flüssigkeitskanälen kleiner als n in der adiabaten Zone (Z_{A}) umfasst.

4. Wärmerohr mit Wiedereintrittsrillen nach Anspruch 3, wobei die Strukturierungen und Zwischenplatten der n Module einen einzigen Flüssigkeitskanal in der adiabaten Zone (Z_{A}) definieren.

5. Wärmerohr mit Wiedereintrittsrillen nach Anspruch 3 oder 4, das Streben umfasst, die sich in der zweiten Richtung (Y) über die gesamte Höhe des oder der Flüssigkeitskanäle in der adiabaten Zone (A) erstrecken, um Versteifungssäulen zu bilden.

6. Wärmerohr mit Wiedereintrittsrillen nach einem der Ansprüche 3 bis 5, das eine Anzahl von einem oder mehreren Verbindungskanälen kleiner als n in der adiabaten Zone (Z_{A}) umfasst.

7. Wärmerohr mit Wiedereintrittsrillen nach Anspruch 6, wobei kein Verbindungskanal in der adiabaten Zone begrenzt ist.

8. Wärmerohr mit Wiedereintrittsrillen nach einem der vorhergehenden Ansprüche, wobei die Strukturierungen nur auf einer lateralen Seite des Fensters sind, das den Dampfkanal begrenzt.

9. Wärmerohr mit Wiedereintrittsrillen nach einem der Ansprüche 1 bis 7, wobei die Strukturierungen auf jeder der beiden lateralen Seiten des Fensters sind, einander gegenüber liegend.

10. Wärmerohr mit Wiedereintrittsrillen nach einem der vorhergehenden Ansprüche, wobei die Wände zwischen Flüssigkeitskanälen in dem Kondensator von progressiv zunehmender Dicke von der adiabaten Zone aus sind.

11. Wärmerohr mit Wiedereintrittsrillen nach einem der vorhergehenden Ansprüche, das durchgehende Öffnungen (25) umfasst, die in den Platten hergestellt sind, um Fluidverbindungen zwischen den Flüssigkeitskanälen (21.1 bis 21.6) in dem Kondensator und/oder in der adiabaten Zone und/oder in dem Verdampfer zu schaffen.

12. Wärmerohr mit Wiedereintrittsrillen nach einem der vorhergehenden Ansprüche, das Umfangsrillen (26) umfasst, die Ablaufkanäle bilden, die, vorzugsweise durch Bearbeitung, an den Längsinnenrändern der Platten, die den Dampfkanal und die Verbindungskanäle begrenzen, mindestens in dem Kondensator hergestellt sind.

13. System, umfassend:
- eine Kältequelle (SF);
- eine Wärmequelle (SC) und
- mindestens ein Wärmerohr mit Wiedereintrittsrillen nach einem der vorhergehenden Ansprüche, wobei das Wärmerohr so ausgebildet ist, dass der Wärmefluss der Wärmequelle (SC) am Verdampfer und die Extraktion von Wärme am Kondensator zu der Kältequelle (SF) hin auf mindestens einer lateralen Fläche der Hülle gegenüber den Flüssigkeitskanälen oder auf einer zu diesen senkrechten lateralen Fläche erfolgt.

## Claims

1. Heat pipe (1) with reentrant grooves, extending in a first longitudinal direction (X), comprising a sealed enclosure (2) extending between a first longitudinal end (3) intended to be heated by a hot source SC to form, within the enclosure, an evaporator and a second longitudinal end (4) intended to be cooled by a cold source SF to form, within the enclosure, a condenser, the sealed enclosure delimiting an adiabatic zone between the evaporator and the condenser, the enclosure comprising a stack of plates (10) in a second direction (Z), orthogonal to the first direction (X), the stack comprising two closing plates, at least a number n of modules on top of each other where n is an integer > 1, each module comprising at least one intermediate plate between the closing plates, the intermediate plate or plates comprising at least one first intermediate plate including at least one window, the edges of which partially delimit a vapour channel (20) extending in the first direction (X) between the evaporator and the condenser, in which the vapour is intended to flow, and on at least one lateral side of the window in a third direction (Y) orthogonal to the first direction (X) and the second direction (Z), at least one structure with edges that partially delimit a liquid channel (21) in the evaporator and the condenser, at least the first intermediate plate delimiting a connecting channel (22) connecting the vapour channel and the liquid channel at least in the evaporator and the condenser, the structures and intermediate plates of the n modules defining a single vapour channel and, on the at least one lateral side of the vapour channel, n liquid channels (21.1 to 21.6) in the evaporator and the condenser, **characterized in that** the width of the n connecting channels (22) in the second direction (Z) is increased in the condenser compared to the width in the adiabatic zone and the evaporator.

2. Heat pipe with reentrant grooves according to Claim 1, wherein the width of the n connecting channels is identical over the entire length in the first direction (Z) in the condenser or gradually increases from the adiabatic zone (Z_{A}).

3. Heat pipe with reentrant grooves according to Claim 1 or 2, comprising a number of liquid channels less than n in the adiabatic zone (Z_{A}).

4. Heat pipe with reentrant grooves according to Claim 3, wherein the structures and intermediate plates of the n modules define a single liquid channel in the adiabatic zone (Z_{A}).

5. Heat pipe with reentrant grooves according to Claim 3 or 4, comprising uprights which extend in the second direction (Y) over the entire height of the liquid channel or channels in the adiabatic zone (A), to constitute stiffening pillars.

6. Heat pipe with reentrant grooves according to one of Claims 3 to 5, comprising a number of connecting channels less than n in the adiabatic zone (Z_{A}).

7. Heat pipe with reentrant grooves according to Claim 6, wherein no connecting channel is delimited in the adiabatic zone.

8. Heat pipe with reentrant grooves according to one of the preceding claims, wherein the structures are only on one lateral side of the window delimiting the vapour channel.

9. Heat pipe with reentrant grooves according to one of Claims 1 to 7, wherein the structures are on each of two lateral sides of the window, facing each other.

10. Heat pipe with reentrant grooves according to one of the preceding claims, wherein the thickness of the walls between liquid channels increases gradually in the condenser, from the adiabatic zone.

11. Heat pipe with reentrant grooves according to one of the preceding claims, comprising through-openings (25) in the plates for creating fluidic interconnections between the liquid channels (21.1 to 21.6) in the condenser and/or in the adiabatic zone and/or in the evaporator.

12. Heat pipe with reentrant grooves according to one of the preceding claims, comprising circumferential grooves (26) forming drainage channels, preferably machined, on the longitudinal inner edges of the plates delimiting the vapour channel and the connecting channels, at least in the condenser.

13. System comprising:
- a cold source (SF);
- a hot source (SC); and
- at least one heat pipe with reentrant grooves according to one of the preceding claims, wherein the heat pipe is arranged so that the heat flow from the hot source (SC) to the evaporator, and the extraction of heat at the condenser to the cold source (SF) occur on at least one lateral face of the enclosure facing the liquid channels, or on a lateral face perpendicular to them.
